# EUROPEAN PATENT APPLICATION

(11) **EP 4 458 608 A1**
(43) Date of publication of application: **06.11.2024**
(21) Application number: 22915594.0
(22) Date of filing: 25.11.2022
(51) Int. Cl.: B60L 58/24, B60L 3/00, B60L 15/20, B60L 50/60, B60L 53/14, B60L 58/10, B62D 49/00, H02J 7/00, H02J 7/04

(54) **ELECTRIC WORK VEHICLE**

(30) Priority: 28.12.2021 JP 2021214399; 28.12.2021 JP 2021214400; 28.12.2021 JP 2021214401
(71) Applicant: Kubota Corporation, Osaka 556-8601 (JP)
(72) Inventor: AOKI Keita, Sakai-shi, Osaka 590-0908 (JP); NISHINAKA Masaaki, Sakai-shi, Osaka 590-0908 (JP); KAWABATA Shinichi, Sakai-shi, Osaka 590-0908 (JP); SHIMOIKE Yuki, Sakai-shi, Osaka 590-0908 (JP); TAKASE Shunya, Sakai-shi, Osaka 590-0908 (JP); MIZOGUCHI Yoshiki, Sakai-shi, Osaka 590-0908 (JP); MITSUI Kenji, Sakai-shi, Osaka 590-0908 (JP)
(74) Representative: Müller-Boré & Partner Patentanwälte PartG mbB
(86) International application number: PCT/JP2022/043492
(87) International publication number: WO 2023/127363

(57) **Abstract**

An electric work vehicle includes: an electric motor M capable of driving a body to travel; a battery 4 configured to supply electric power for driving to the electric motor M, the battery 4 being chargeable by an external power supply device KD; a temperature detection means 40 configured to detect a temperature of the battery 4; and a control device 34 configured to control operation of the electric motor M and control a state of charging performed by the power supply device KD. In response to charging being performed by the power supply device KD, the control device 34 sets a target charging current in a state where work travel is possible after charging, based on a detected value of the temperature detection means 40 and a preset setting condition.

## Description

### Technical Field

The present invention relates to an electric work vehicle including an electric motor that is configured to perform, for example, ground work or other work while causing a body to travel, and is capable of driving the body so as to travel, and a battery that supplies electric power for driving to the electric motor.

### Background Art

### Background Art 1

In this type of electric work vehicle, as described in Patent Document 1, for example, in response to battery power being consumed, charging is performed from an external power supply device connected via a connection connector. In this type of electric work vehicle, when charging the battery, the maximum charging current that can be passed through the battery is instructed to the power supply device so that the battery can be charged in as short a time as possible, and power is supplied to the battery.

### Background Art 2

In this type of electric work vehicle, as described in Patent Document 1, for example, in response to battery power being consumed, charging is performed from an external power supply device connected via a connection connector. In this type of electric work vehicle, charging work is performed while a portable operation key is inserted and a key switch is operated to supply power to electrical components including a control device.

### Background Art 3

In this type of electric work vehicle, as described in Patent Document 1, for example, in response to battery power being consumed, charging is performed from an external power supply device connected via a connector for connection. During charging, no special control is performed on the body side.

### Prior Art Documents

### Patent Documents

Patent Document 1: JP 2021-957A

### Disclosure of the Invention

### Problem to be Solved by the Invention

### Problem 1

A problem with [Background Art 1] is as follows.

In response to a charging current being passed through the battery as described above to charge the battery, the current generates Joule heat, which causes the internal temperature of the battery to rise. Conventionally, the maximum charging current that can flow through the battery is supplied from the power supply device to the battery, and therefore the temperature rise increases, and for example, in response to charging being performed until a fully charged state is reached, the temperature becomes high in some cases.

A vehicle such as a passenger car that performs only movement travel requires a large driving force when departing, but does not require that large of a driving force while traveling. Moreover, there is little risk that the battery temperature will rise because the battery is cooled down by driving at high speed.

However, for example, in electric work vehicles that perform ground work or other work, a large driving load is always applied when driving, and the electric motor outputs a large driving force, resulting in a large driving current flowing therethrough. In response to such a large driving current flowing, the temperature of the battery may rise significantly. In particular, sealed batteries are sometimes used during agricultural work or the like to protect from dust and muddy water, and in that case, the temperature does not drop easily.

In response to work travel being started immediately after the charging process ends, if the battery is charged at the maximum charging current and the battery temperature has risen, there is a risk that the battery temperature will rise excessively due to the temperature rise accompanying work travel and the battery will detect a temperature abnormality, resulting in a decrease in output, early deterioration, or the like.

In view of this, there has been a desire to be able to prevent the temperature of the battery from rising excessively during work travel. Problem 2

A problem with [Background Art 2] is as follows.

Charging the battery takes a long time, and the driver may depart from the body during charging while the operation key is still attached. In this case, another person other than the driver can freely operate the key, and the work vehicle can be driven and operated by the other person. As a result, a problem has arisen in which the work vehicle is subjected to theft. If the operation key is removed during charging in order to avoid such theft, the charging process will not be performed after that, and the battery will not be charged to a sufficient amount.

In view of this, if the charging work takes time, there is desire to be able to perform charging to a sufficient amount while preventing the work vehicle from being stolen, even if the driver sometimes departs from the body. Problem 3

A problem with [Background Art 3] is as follows.

Charging the battery may take a long time. As a result, it is conceivable that while charging is being performed, for example, the driver forgets that charging is in progress, mistakenly sits in the driving section of the body, and performs a driving operation. It is also conceivable that another person performs the driving operation when the driver departs from the body. In this case, there is a risk that the body will move unexpectedly and the body or the power supply device will be damaged, and thus the safety of the body during charging has not been sufficiently managed.

In view of this, there has been a desire to be able to properly manage the safety of the body while performing charging.

### Means for Solving Problem

The solution to [Problem 1] is as follows.

The characteristic configuration of the electric work vehicle according to the present invention includes: an electric motor configured to drive a body of the electric work vehicle to travel; a battery configured to supply electric power for driving to the electric motor, the battery being chargeable by an external power supply device; a temperature detection means for detecting a temperature of the battery; and a control device configured to control operation of the electric motor and control a state of charging performed by the power supply device, in which in response to charging being performed by the power supply device, the control device sets a target charging current in such a manner as to enable work travel after charging, based on a detected value of the temperature detection means and a preset setting condition.

According to the present invention, in response to the battery being charged by the power supply device, the control device sets the target charging current in such a manner as to enable work travel after charging ends. That is, the temperature of the battery before charging is detected by the temperature detection means. Then, a target charging current is set based on the detected temperature value and preset setting conditions.

Various conditions are conceivable as the setting condition. That is, a temperature rise in the battery that occurs accompanying work travel after charging can be predicted in advance through experiments or the like, a target temperature is set lower by an amount corresponding to that temperature rise, and a charging condition according to which charging can be performed efficiently while suppressing the temperature to be lower than that temperature is set. The charging current set in this manner is supplied to charge the battery.

Accordingly, even if the temperature of the battery rises due to work travel being performed after charging, the temperature of the battery will not exceed the allowable temperature, and it is possible to avoid a case in which the temperature of the battery rises excessively during work travel.

In the present invention, it is preferable that as the setting condition, the control device sets, in advance, a correlation between a temperature rise of the battery that is predicted to occur accompanying work travel after charging and a target charging current corresponding to an allowable temperature rise of the battery due to charging.

According to this configuration, the allowable temperature rise of the battery due to charging can be understood from the allowable temperature at which there is a risk that the battery will malfunction and the detected value of the temperature detection means, and it is possible to determine and set the appropriate target charging current from the allowable temperature rise amount, based on a preset correlation.

In the present invention, it is preferable that in response to work travel being performed, the control device stops operation of the electric motor in response to the temperature of the battery detected by the temperature detection means exceeding an allowable upper limit temperature, or executes a used power suppression process for reducing drive output of the electric motor, and sets the correlation in a manner such that even if a temperature rise occurs accompanying work travel after charging, the temperature of the battery is suppressed to a temperature according to which the used power suppression process is not executed.

According to this configuration, if the temperature of the battery exceeds the allowable upper limit temperature and continues in that state while work travel is being performed, there is a risk that the battery will malfunction, and therefore a used power suppression process is executed, whereby it is possible to suppress the amount of current supplied from the battery and avoid the risk of malfunction. However, with such a configuration, the traveling of the body may stop or work may not be carried out properly.

In view of this, when setting the target charging current during charging, a correlation is set such that the temperature of the battery can be suppressed to a temperature at which the used power suppression process is not executed. As a result, it is possible to perform work properly without reducing work efficiency due to execution of the used power suppression process during work travel.

In the present invention, it is preferable that a work device is attachable to and detachable from the body of the electric work vehicle, and the control device sets the target charging current to a different value depending on whether or not the work device is attached.

If a work device is attached, the driving load on the electric motor is large, and therefore the temperature rise of the battery that occurs accompanying work travel is large. On the other hand, if the work device is not attached, the driving load on the electric motor is small, and the temperature rise in the battery that occurs accompanying work travel is small.

In view of this, in this configuration, the target charging current is set to a different value depending on whether the work device is attached or not attached. As a result, an appropriate charging current according to the work status can be supplied.

In the present invention, it is preferable that the work device includes a work device control unit, the work device control unit and the control device are capable of communicating information with each other via a communication means, and the control device determines a type of the attached work device based on identification information transmitted from the work device control unit, and sets the target charging current depending on the type.

If a work device with a large drive load is attached, the drive load on the electric motor is large, and therefore the temperature rise in the battery that occurs accompanying work travel is large. On the other hand, if a work device with a small driving load is not attached, the driving load on the electric motor is relatively small, and the temperature rise in the battery that occurs accompanying work travel is relatively small.

In view of this, in this configuration, the target charging current is set to a different value depending on the type of work device to be attached. As a result, charging can be performed at an appropriate target charging current depending on the content of the work to be performed after charging.

In the present invention, it is preferable that the outside of the battery is covered in a hermetically-sealed state by a storage case.

According to this configuration, since the outside of the battery is covered in a hermetically-sealed state, it is less likely to be affected by dust, muddy water, or the like due to agricultural work or the like, for example, and its durability is improved.

The solution to [Problem 2] is as follows.

The characteristic configuration of the electric work vehicle according to the present invention includes: an electric motor configured to drive a body of the electric work vehicle to travel; a battery configured to supply electric power for driving to the electric motor, the battery being chargeable by an external power supply device; a connection portion to which a power supply connector of the power supply device is connectable; a control device configured to control operation of the electric motor and control a state of charging performed by the power supply device; and a start command means for switching the control device to an operable state by being operated manually while a portable operation key is near the body or while the operation key is attached to an attachment portion, in which the control device is switched to a charging mode in response to being in the operable state and in a connection state where the power supply connector is connected to the connection portion, and in the charging mode, the power supply device performs charging, and after charging by the power supply device is started, the power supply device continues to perform charging even if the operation key is separated from the body or the operation key is removed from the attachment portion.

According to the present invention, in response to the start command means being manually operated with the operation key near the body or with the operation key attached to the attachment portion, the control device switches to the operable state. In response to the control device being in an operable state and in a connected state in which the power supply connector is connected to the connection portion, the control device switches to the charging mode, and the battery is charged in this charging mode. Even if the driver departs from the body while holding the operation key during charging, charging continues and the battery can be charged to a sufficient amount.

If the driver departs from the body while holding the operation key, the operation key is separated from the body, and therefore even if another person tries to cause the body to travel, the operation key is not present, and therefore the electric motor cannot be activated by the control device or the like, and there is no risk of theft.

Accordingly, even if the driver departs from the body when the charging work takes time, it is possible to perform charging to a sufficient charging amount while avoiding the risk of theft of the work vehicle.

In the present invention, it is preferable that the control device switches to the charging mode upon being switched to the operable state while the power supply connector is connected to the connection portion.

According to this configuration, when switching to the charging mode, it is necessary to first perform an operation of switching the control device to the operable state while the power supply connector is connected to the connection portion. On the contrary, in a configuration in which the charging mode is switched to in response to the control device first being switched to the operable state and then the power supply connector being connected to the connection portion, for example, there is a risk that the power supply connector will erroneously be connected to the connection portion while the electric motor is set to the operable state. However, according to this configuration, since the power supply connector is first connected to the connection portion, it is obvious that a charging operation needs to be performed, and there is little risk of making a mistake in operation.

In the present invention, it is preferable that in response to the power supply device continuing to perform charging after the operation key is separated from the body or after the operation key is removed from the attachment portion, the control device automatically switches to a non-operating state in response to charging being completed.

According to this configuration, in response to charging being performed continuously and charging being completed while the operation key is separated from the body, the control device automatically switches to the non-operating state. Therefore, even if the start command means is manually operated by another person who does not have the operation key, the control device will not enter the operable state, and operational safety can be ensured.

In the present invention, it is preferable that the operation key is insertable into an insertion portion serving as the attachment portion.

According to this configuration, when the driver uses the operation key, the driver needs to perform an operation of inserting the operation key into the insertion portion and attaching the operation key thereto, and therefore the driver can easily recognize that the operation key is attached to the body. For example, with a wireless operation key, there is a risk that the driver will depart from the body while the operation key is left in a location other than the driving section of the body, but with the above configuration, this kind of disadvantage is easily avoided.

The solution means for [Problem 3] is as follows.

The characteristic configuration of the electric work vehicle according to the present invention is an electric motor configured to drive a body of the electric work vehicle to travel; a battery configured to supply electric power for driving to the electric motor, the battery being chargeable by an external power supply device; a connection portion to which a power supply connector of the power supply device is connectable; and a control device configured to control operation of the electric motor and control a state of charging performed by the power supply device, in which the control device prohibits movement travel of the body during a charging operation in a period from when charging of the battery by the power supply device is started while the power supply connector is connected to the connection portion, until when charging of the battery is completed.

According to the present invention, movement travel of the body is prohibited during the charging operation in the period after when the charging of the battery is started until when the charging is completed. As a result, when charging takes a long time, even if the driver accidentally sits in the driving section of the body and performs a driving operation, or another person attempts to perform a driving operation, a disadvantage such as the body or the power supply device being damaged by the body moving is avoided.

Accordingly, it is possible to properly manage the safety of the body during charging.

In the present invention, it is preferable that the control device does not drive the electric motor during the charging operation.

According to this configuration, the electric motor is not driven during the charging operation, and therefore the body does not move due to the motive force of the electric motor. If the body includes a work device, the work device is not driven by the electric motor. Accordingly, since the electric motor that is the motive power source cannot perform driving, safety can be ensured.

In the present invention, electric power from the battery is supplied to the electric motor via an inverter, and during the charging operation, the control device stops driving of the electric motor by stopping output to the inverter.

According to this configuration, by stopping the output to the inverter, the operation of the electric motor can be reliably restrained.

In the present invention, it is preferable that motive power of the electric motor is transmitted to a body travel device via a travel clutch, and during the charging operation, the control device does not engage the travel clutch even if a command to engage the travel clutch is issued.

According to this configuration, the travel clutch does not enter the engaged state during the charging operation, and therefore even if the electric motor is driven at this time, the body does not perform movement travel, and thus safety can be ensured.

In this case, since it is possible to drive the electric motor, for example, the work device can be driven while the movement of the body is stopped, and convenience in use can be improved.

In the present invention, it is preferable that a work device is attachable to and detachable from the body, motive power of the electric motor is transmitted to the work device via a work clutch, and during the charging operation, the control device does not engage the work clutch even if a command to engage the work clutch is issued.

According to this configuration, during charging, the work clutch is prohibited from switching to the engaged state while the body is prohibited from moving, and therefore safety can be further improved.

### Brief Description of the Drawings

FIG. 1 is a left side view of a tractor.
FIG. 2 is a left side view showing an arrangement of an inverter and the like.
FIG. 3 is a diagram showing the flow of power transmission.
FIG. 4 is a block diagram showing a configuration for charging.
FIG. 5 is a flowchart of a control operation of a first embodiment.
FIG. 6 is a diagram showing charging characteristics of a battery of the first embodiment.
FIG. 7 is a diagram showing a target charging current of the first embodiment.
FIG. 8 is a diagram showing charging characteristics of the battery of the first embodiment.
FIG. 9 is a block diagram showing a charging configuration of an alternative embodiment of the first embodiment.
FIG. 10 is a flowchart of a control operation of an alternative embodiment of the first embodiment.
FIG. 11 is a flowchart of a control operation of a second embodiment.
FIG. 12 is a flowchart of a control operation of a third embodiment.
FIG. 13 is a diagram showing a flow of power transmission in an alternative embodiment of the third embodiment.
FIG. 14 is a block diagram showing a charging configuration of an alternative embodiment of the third embodiment.

### Best Mode for Carrying out the Invention

### First Embodiment

An embodiment (first embodiment) that is an example of the present invention will be described below with reference to the drawings.

Embodiments for carrying out the present invention will be described based on the drawings. Note that in the following description, unless otherwise specified, the direction of arrow F in the drawings is "front," the direction of arrow B is "rear," the direction of arrow L is "left," and the direction of arrow R is "right". The direction of arrow U in the drawing is "up" and the direction of arrow D is "down".

### Overall Configuration of Tractor

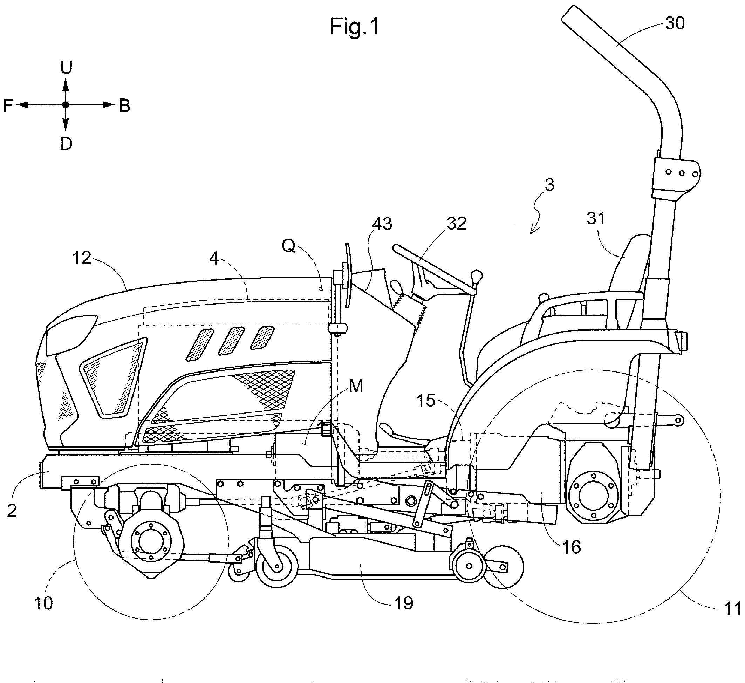

The following describes a tractor serving as an example of an electric work vehicle according to the present invention. As shown in FIG. 1, the tractor includes left and right front wheels 10, left and right rear wheels 11, and a cover member 12.

The tractor includes a body frame 2 and a driving section 3. The body frame 2 is supported by left and right front wheels 10 and left and right rear wheels 11.

A cover member 12 is arranged at a front portion of the body of the tractor. The driving section 3 is behind the cover member 12. In other words, the cover member 12 is in front of the driving section 3.

The driving section 3 includes a protective frame 30, a driver's seat 31, and a steering wheel 32. An operator can sit in the driver's seat 31. This allows the operator to board the driving section 3. The left and right front wheels 10 are steered by operating the steering wheel 32. The operator can perform various driving operations in the driving section 3.

The tractor includes a travel battery 4. The cover member 12 is configured to be pivotable about an opening/closing axis Q extending in the left-right direction of the body. As a result, the cover member 12 can open and close. When the cover member 12 is in a closed state, the travel battery 4 is covered by the cover member 12.

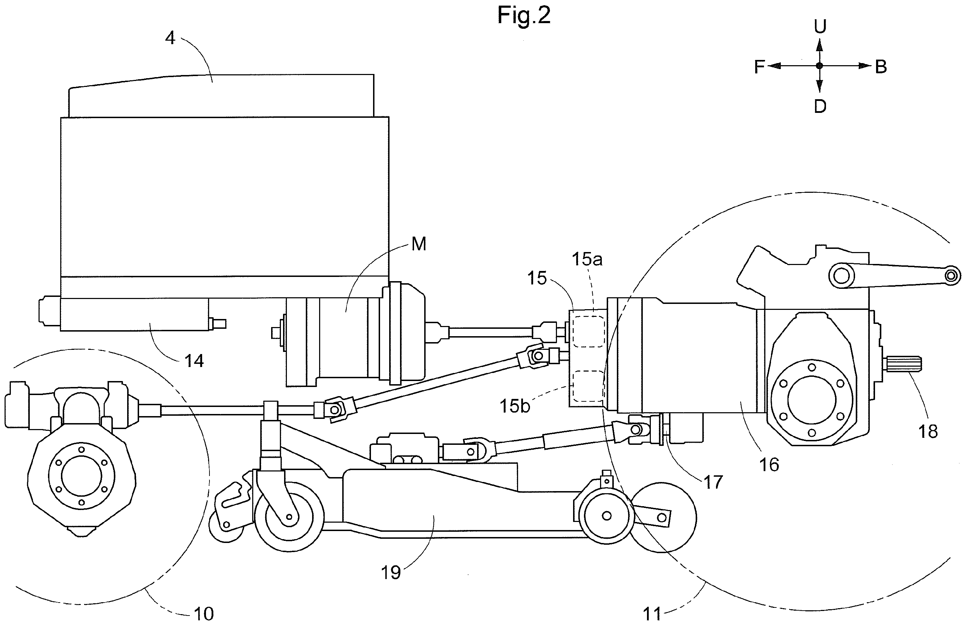

As shown in FIG. 2, the tractor includes an inverter 14 and an electric motor M. The travel battery 4 supplies power to the inverter 14. The inverter 14 converts DC power supplied from the travel battery 4 to AC power, and supplies the AC power to the electric motor M. The electric motor M is driven by the AC power supplied from the inverter 14.

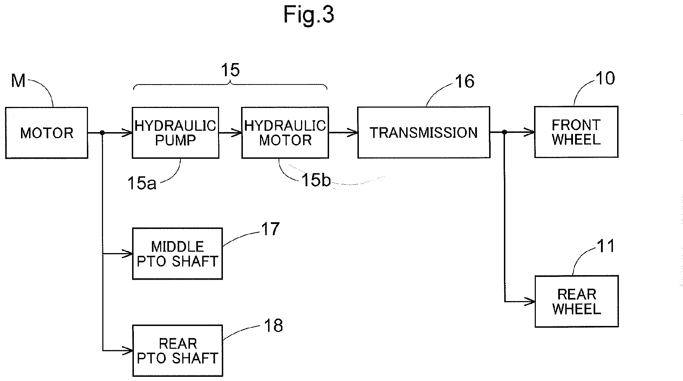

As shown in FIGS. 2 and 3, the tractor includes a hydraulic continuously variable transmission 15 and a transmission 16. As shown in FIG. 3, the hydraulic continuously variable transmission 15 includes a hydraulic pump 15a and a hydraulic motor 15b.

The hydraulic pump 15a is driven by rotational motive power transmitted from the electric motor M. As a result of the hydraulic pump 15a being driven, rotational motive power is output from the hydraulic motor 15b. The hydraulic continuously variable transmission 15 is configured to change the speed of rotational motive power between the hydraulic pump 15a and the hydraulic motor 15b. Also, the hydraulic continuously variable transmission 15 is configured to be capable of changing the transmission ratio in a stepless manner.

The rotational motive power output from the hydraulic motor 15b is transmitted to the transmission 16. The speed of the rotational motive power transmitted to the transmission 16 is changed by a gear transmission mechanism included in the transmission 16, and the rotational motive power is distributed to the left and right front wheels 10 and the left and right rear wheels 11. Thus, the left and right front wheels 10 and the left and right rear wheels 11 are driven.

As shown in FIGS. 2 and 3, the tractor also includes a middle PTO shaft 17 and a rear PTO shaft 18. Rotational motive power output from the electric motor M is distributed to the hydraulic pump 15a, the middle PTO shaft 17, and the rear PTO shaft 18. The middle PTO shaft 17 and the rear PTO shaft 18 are rotated by the distributed rotational motive power.

If a work device is connected to the middle PTO shaft 17 or the rear PTO shaft 18, the work device is driven by rotational motive power transmitted by the middle PTO shaft 17 or the rear PTO shaft 18. For example, in the present embodiment, a grass cutting device 19 is connected to the middle PTO shaft 17 as shown in FIG. 2. The grass cutting device 19 is driven by rotational motive power transmitted by the middle PTO shaft 17.

### Configuration Relating to Motor Control

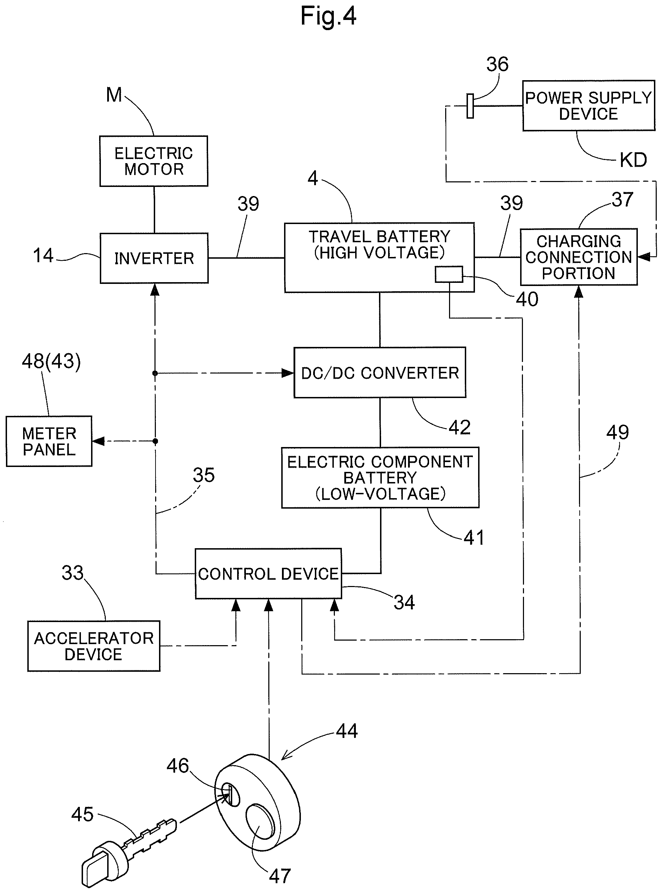

As shown in FIG. 4, the configuration relating to the control of the electric motor M includes an accelerator device 33, a control device 34 that controls the operation of the electric motor M, and the inverter 14. The accelerator device 33 is provided near the steering wheel 32. Although not shown in the drawings, the accelerator device 33 includes a pivotable lever and a potentiometer that is operated by pivoting the lever. The accelerator device 33 is connected to the control device 34. The control device 34 is connected to the inverter 14 via a signal harness 35. The control device 34 issues a command to the inverter 14 in accordance with a command from the accelerator device 33. The inverter 14 controls the output of the electric motor M by adjusting the electric power supplied to the electric motor M from the travel battery 4 in accordance with a command from the control device 34.

### Configuration Relating to Charging

The travel battery 4 can be charged by an external power supply device KD. The tractor includes a charging connection portion 37 to which a power supply connector 36 of the power supply device KD is connectable. The charging connection portion 37 is provided inside the cover member 12 and is exposed to the outside when the cover member 12 is pivoted to be open. The control device 34 controls the operation of the electric motor M and controls the state of charging performed by the power supply device KD.

The charging connection portion 37 complies with a commonly-used standard. While the power supply connector 36 is connected to the charging connection portion 37, the travel battery 4 is charged via a power supply line 39. The travel battery 4 supplies high-voltage (e.g., several tens of volts to several hundred volts) electric power to the inverter 14 and the electric motor M for traveling, via the power supply line 39.

The travel battery 4 is formed using, for example, a lithium-ion battery, and is formed by stacking a large number of low-voltage small unit batteries (cells), and the outside is accommodated by being covered in a hermetically-sealed state by a storage case, although this is not shown in the drawings. Accordingly, heat tends to accumulate inside the battery, and when the internal temperature rises, it is difficult for the temperature to drop. In view of this, the travel battery 4 includes a temperature sensor 40 serving as a temperature detection means for detecting the internal temperature. Information detected by the temperature sensor 40 is input to the control device 34.

In addition to the travel battery 4, the tractor includes an electrical component battery 41 that supplies power to the control device 34 and other electrical components. The electrical component battery 41 supplies low-voltage (12 volts) electric power to drive the electrical components. The electrical component battery 41 is charged with electric power supplied from the travel battery 4 via a DC/DC converter 42.

The driving section 3 includes a switching operation portion 44 as a start command means capable of switching the control device 34 between an operable state and a non-operating state. The switching operation portion 44 includes an insertion portion 46 serving as an attachment portion into which a portable operation key 45 can be inserted and attached, and a push-button switch 47 that can be pressed manually. By pressing the switch 47 with the operation key 45 inserted into and attached to the insertion portion 46, the control device 34 can be switched from a non-operating state to an operable state. The operation key 45 functions as a key that can be identified only by the work vehicle, similarly to a general vehicle key.

The operation panel 43 includes a meter panel 48 that displays, for example, the traveling state and the working state of the body, battery information (charge amount and temperature), and the like. The meter panel 48 is connected to the control device 34, and operation of the meter panel 48 is controlled by the control device 34.

The control device 34, the inverter 14, the travel battery 4 (including the temperature sensor 40), the DC/DC converter 42, the meter panel 48, the charging connection portion 37, and the like are connected via a CAN (Controller Area Network) signal harness 35 so as to enable data communication. The control device 34 communicates with the charging connection portion 37 via a charging communication harness 49 and transmits information regarding whether or not the power supply connector 36 is connected to the charging connection portion 37, information on the charging current required on the work vehicle side, and the like. Signals can also be communicated between the charging connection portion 37 and the power supply device KD. Also, operation information of the switching operation portion 44 is input to the control device 34.

In response to the temperature of the travel battery 4 detected by the temperature sensor 40 exceeding the allowable upper limit temperature Tm during work travel, the control device 34 executes a used power suppression process for reducing the drive output of the electric motor M. For example, the used power suppression process is a process for suppressing the power consumption of the travel battery 4, such as stopping the drive of the electric motor M, causing travel at a speed lower than the travel speed set by the driver, or restraining the use of a work device with a large drive load.

To add description, if the temperature of the travel battery 4 exceeds the allowable upper limit temperature Tm, the travel battery 4 may be damaged, and therefore by executing the used power suppression process in order to prevent such damage to the travel battery 4, the flow of a large drive current to the electric motor M is stopped, thereby suppressing a temperature rise of the travel battery 4.

### Control for Charging of First Embodiment

In response to the control device 34 being switched to the operable state while the power supply connector 36 is connected to the charging connection portion 37, the control device 34 switches to the charging mode. Then, in the charging mode, the travel battery 4 is charged by the power supply device KD.

In response to charging being performed by the power supply device KD, the control device 34 sets a target charging current in a state where work travel is possible after charging, based on the detected value of the temperature sensor 40 and preset setting conditions. As a setting condition, a correlation is set in advance between the temperature rise of the travel battery 4 that is predicted to occur accompanying work travel after charging and the target charging current corresponding to the allowable temperature rise of the travel battery 4 due to charging. As a result of this correlation, even if the temperature rises accompanying work travel after charging, the temperature of the travel battery 4 is set so that it can be suppressed to a temperature at which the used power suppression process is not executed.

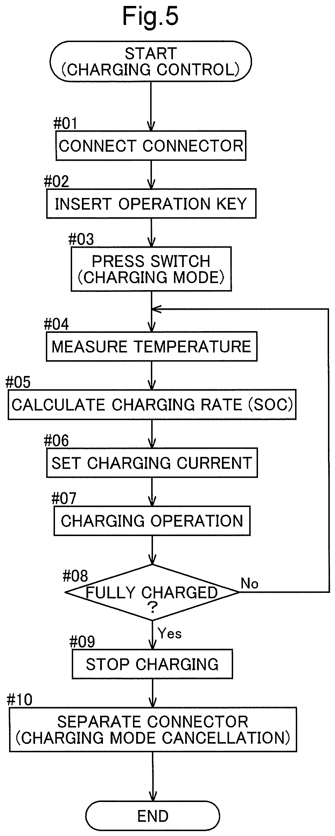

Hereinafter, specific charging control performed by the control device 34 will be described with reference to the flowchart in FIG. 5.

When charging the travel battery 4, an operator connects the power supply connector 36 of the power supply device KD to the charging connection portion 37. Next, in the switching operation portion 44 provided in the driving section 3, the operation key 45 is inserted into and attached to the insertion portion 46, and the switch 47 is pressed. Upon recognizing this, the control device 34 switches to the charging mode (steps #01, #02, #03).

Upon entering the charging mode, the internal temperature of the travel battery 4 is measured according to the detected value of the temperature sensor 40 (step #04). Also, the travel battery 4 calculates the charging rate (SOC) from the voltage value and other information (step #05). Next, a target charging current to be supplied to the travel battery 4 is set such that work travel is possible after charging (step #06).

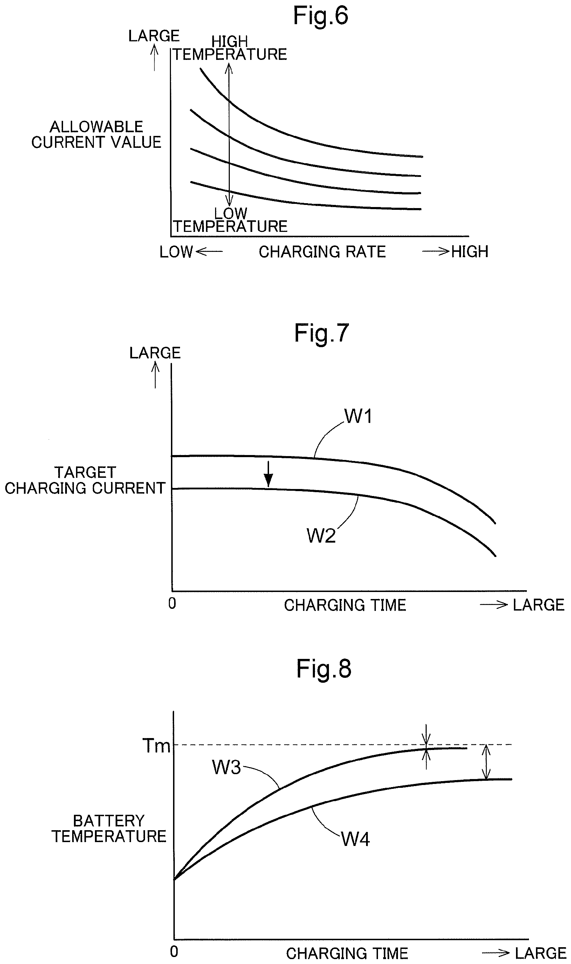

That is, the control device 34 stores data indicating a relationship between charging characteristics known in advance for the travel battery 4, such as the charging rate (SOC) (State of Charge) of the travel battery 4, which changes depending on the temperature of the travel battery 4 as shown in FIG. 6, and the maximum allowable value of the charging current (allowable current value). Also, in addition to this, the control device 34 stores various types of data, such as data (see FIG. 8) indicating a relationship between the charging time and the temperature rise accompanying charging, which changes depending on the charging current, and data on the temperature rise of the travel battery 4 that is predicted to occur accompanying work travel.

The control device 34 determines the temperature rise amount of the travel battery 4 that is allowed accompanying the current instance of charging, based on the detected value of the temperature sensor 40 before charging, the allowable upper limit temperature Tm, which is the maximum value of the operable range of the travel battery 4, data on the temperature rise of the travel battery 4 that is predicted to occur accompanying work travel performed after charging, and the like.

Also, the allowable current value (maximum value) that can be supplied to the travel battery 4 can be determined based on the charging characteristics shown in FIG. 6 and the detected value of the temperature sensor 40. For example, as indicated by line W1 in FIG. 7, as charging progresses, this allowable current value changes sequentially accompanying changes in the charging rate (SOC) and changes in temperature.

If the above-mentioned allowable current value continues to flow in the period from the start of charging until the end of charging (full charge), the temperature of the travel battery 4 rises to a high temperature near the allowable upper limit temperature Tm due to the temperature rise caused by the charging current flowing, as indicated by line W3 in FIG. 8.

In view of this, data on a correlation indicating the relationship between data on the temperature rise of the travel battery 4 that is predicted to occur accompanying work travel after charging and a target charging current that will enable work travel when charging ends is set in advance, and a target charging current that is smaller than the allowable current value is set based on this data and the detected value of the temperature sensor 40 (see line W2 in FIG. 7).

As a result, as indicated by line W4 in FIG. 8, even if the temperature rises due to the flow of the changed target charging current, the temperature of the travel battery 4 will be lower than the allowable upper limit temperature Tm by an amount corresponding to the temperature rise of the travel battery 4 that is predicted to occur accompanying work travel.

Next, necessary information is transmitted via the charging communication harness 49 so as to supply power to the power supply device KD, and the power supply device KD performs a charging operation on the travel battery 4 (step #07). The travel battery 4 is charged to a preset charging state, and in response to the travel battery 4 being fully charged, charging is stopped (steps #08, #09). Thereafter, in response to the power supply connector 36 of the power supply device KD being removed from the charging connection portion 37 by the operator and restarted, the charging mode is canceled (step #10) and the charging control ends.

### Alternative Embodiments of First Embodiment

(1) Although the above-described embodiment showed a case where no work device is connected at the rear of the body, another work device such as a rotary tiller or a plow, for example, can be attached and detached at the rear of the body. In response to such a work device being attached, the driving load during work travel increases, and the magnitude of the driving load varies depending on the type of work device that is attached.

In view of this, the control device 34 sets the target charging current to a different value depending on whether or not the work device is attached. Furthermore, the work device 50 includes a work device control unit 51, the work device control unit 51 and the control device 34 are able to communicate information in both directions via a communication line 52 serving as a communication means, and the control device 34 determines the type of the attached work device 50 based on the identification information transmitted from the work device control unit 51 and sets the target charging current depending on the type.

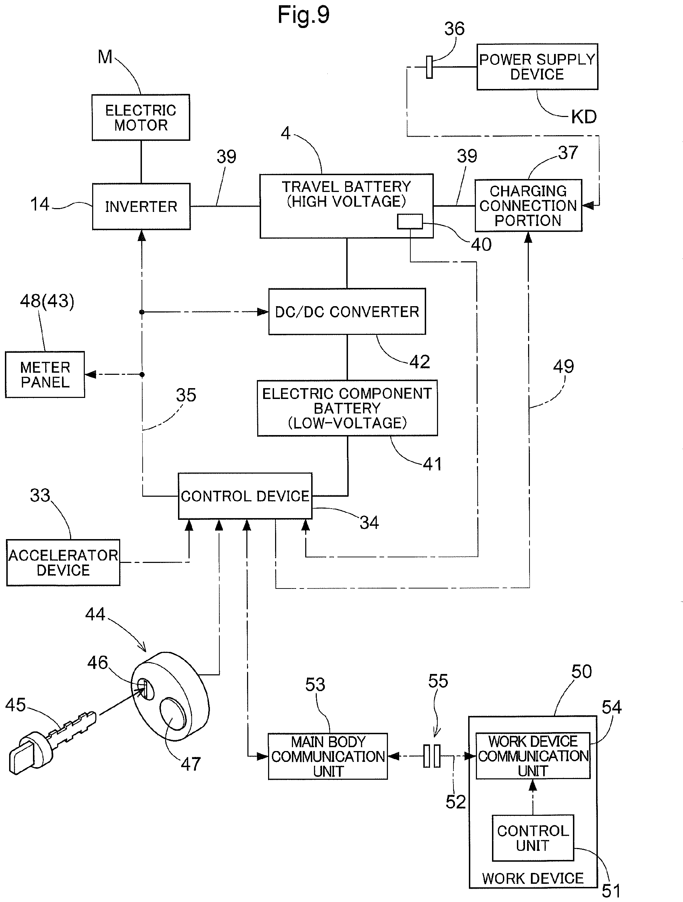

To add description, as shown in FIG. 9, the body includes a main body communication unit 53, the work device 50 includes the work device control unit 51 and the work device communication unit 54, and the main body communication unit 53 and the work device communication unit 54 are able to communicate with each other alternatingly via the communication line 52 that can be connected and disconnected by a connector 55. Communication via this communication line 52 is performed using a communication protocol complying with an international standard (ISOBUS).

When the work device 50 is attached and the communication line 52 is connected, the control device 34 can identify the type of the work device 50. When charging the travel battery 4, a smaller target charging current is set compared to when the work device 50 is not attached. Also, since the temperature rise amount of the travel battery 4 that is predicted to occur accompanying work travel is determined in advance according to the type of the work device 50, when a different type of work device is attached, a different target charging current will be set depending on the type.

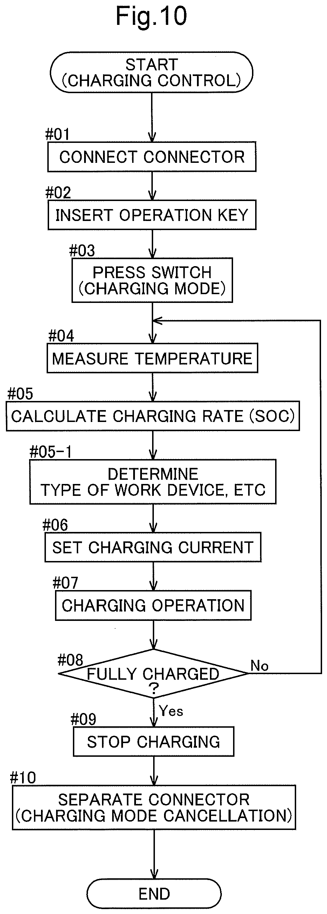

As shown in FIG. 10, before setting the target charging current, the type of the work device 50, whether or not the work device 50 is connected, and the like are determined (step #05-1), and the charging current is set with consideration given also to the temperature rise due to work performed by the connected work device 50. The operations of the work device 50 other than the determination process are the same as those in the above-described embodiment, and therefore description thereof is omitted.

Also, even if the work device 60 is not actually connected, the next work device to be connected may be manually set, and the temperature rise due to the operation of that work device may be given consideration.

(2) In the above-described embodiment, as a setting condition, it is also possible to set a correlation between the temperature of the travel battery 4 and a target charging current according to which the battery temperature when fully charged is lower than the allowable upper limit temperature Tm by a certain amount. However, the above-mentioned certain amount corresponds to the amount of temperature rise of the travel battery 4 that is expected to occur accompanying work travel after charging. Various other conditions can be set as the setting condition.

(3) In the above embodiment, the control device 34 switched to the charging mode upon being switched to the operable state while the power supply connector 36 was connected to the charging connection portion 37, but instead of this configuration, the control device 34 may also switch to the charging mode in response to the control device 34 being switched to the operable state in advance and thereafter the power supply connector 36 being connected to the charging connection portion 37.

(4) In the above-described embodiment, the outside of the travel battery 4 was covered in a hermetically-sealed state by the storage case, but instead of such a configuration, it is also possible to use a type of battery that is uncovered.

### Second Embodiment

An embodiment (second embodiment) that is an example of the present invention will be described below with reference to the drawings. Note that the overall configuration of the tractor, the configuration relating to motor control, and the configuration relating to charging are the same as in the first embodiment. Hereinafter, only the points different from the first embodiment will be described, and description of the same configurations will be omitted.

### Control for Charging in Second Embodiment

The control device 34 switches to the charging mode upon being switched to the operable state while the power supply connector 36 is connected to the charging connection portion 37. Then, in the charging mode, the travel battery 4 is charged by the power supply device KD.

The control device 34 prohibits movement travel of the body during a charging operation in the period from when the power supply device KD starts charging the travel battery while the power supply connector 36 is connected to the charging connection portion 37, until when the charging of the travel battery 4 is completed. Specifically, the control device 34 does not drive the electric motor M during the charging operation.

The control device 34 continues charging by the power supply device KD even if the operation key 45 is removed from the insertion portion 46 after starting charging by the power supply device KD. If the control device 34 continues to be charged by the power supply device KD after the operation key 45 is removed from the insertion portion 46, the control device 34 automatically switches to the non-operating state in response to charging being completed.

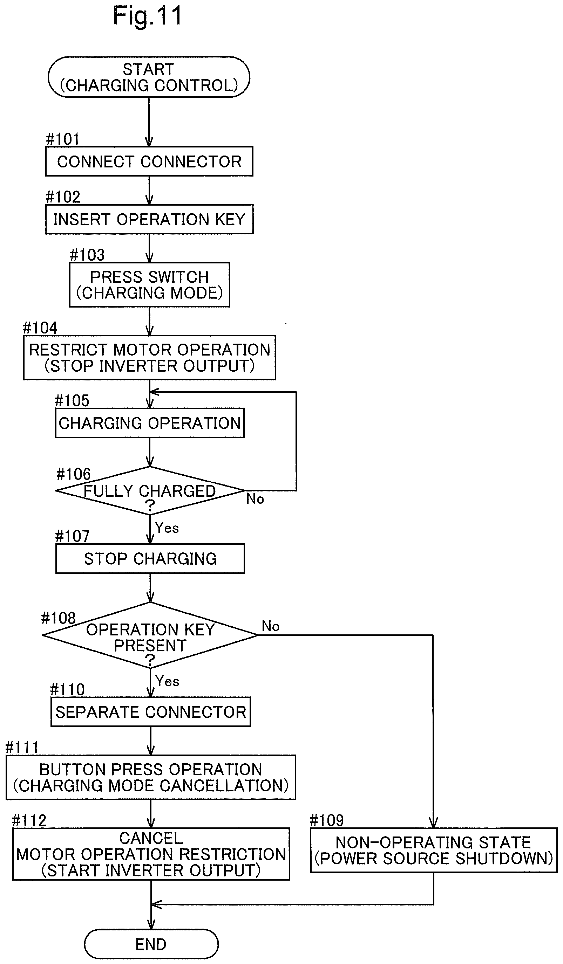

Hereinafter, specific charging control performed by the control device 34 will be described with reference to the flowchart in FIG. 11.

In response to charging the travel battery 4, the operator connects the power supply connector 36 of the power supply device KD to the charging connection portion 37. Next, in the switching operation portion 44 provided on the operation panel 43 of the driving section 3, the operation key 45 is inserted into and attached to the insertion portion 46, and the switch 47 is pressed. When the control device 34 recognizes this, the control device 34 switches to the charging mode (steps #101, #102, #103).

Upon being switched to the charging mode, the operation of the electric motor M is restrained by stopping the output of the inverter 14 (step # 104). Next, necessary information is transmitted via the charging communication harness 49 so as to supply power to the power supply device KD, and the power supply device KD starts charging the travel battery 4 (step #105).

The travel battery 4 is charged to a preset charging state, and when a fully-charged state is reached, charging is stopped (steps #106 and #107).

When charging ends, it is determined whether or not the operation key 45 has been inserted into the insertion portion 46 (step #108). At that time, if it is determined that the operation key 45 has been removed and is not attached, it is assumed that the operation key 45 was removed and taken by the driver while charging was being performed, and therefore the control device 34 is switched to the non-operating state and the power supply is mandatorily cut off (step #109).

Accordingly, if the power supply device KD continues performing charging after the operation key 45 is removed from the insertion portion 46, the control device 34 will automatically switch to the non-operating state in response to charging being completed.

If the operation key 45 is inserted when charging has ended, the operator disconnects the power supply connector 36 of the power supply device KD to disconnect from the charging connection portion 37, and thereafter presses the switch 47, whereupon the charging mode is canceled (steps #108, #110, #111). At this time, the output of the inverter 14 is restarted to enable the electric motor M to operate, thereby canceling the operation restrained state of the electric motor M (step #112). Accordingly, while the travel battery 4 is being charged, the electric motor M is not activated even if an operation for causing the vehicle to travel is performed, and the vehicle is prohibited from performing movement travel.

### Alternative Embodiments of Second Embodiment

(1) The above-described embodiment indicated that the operation key 45 can be inserted into the insertion portion 46, but instead of this configuration, the operation key 45 can communicate wirelessly with a reception unit in the body, and the control device 34 may switch to the operable state in response to the switch 47 being operated while the operation key 45 is near the body.
(2) In the above-described embodiment, the control device 34 automatically switched to a non-operating state in response to the charging being completed after the operation key 45 is removed from the attachment portion, but instead of this configuration, for example, communication with a mobile terminal of the driver may be enabled and the driver may be notified that charging has ended, or notification may be performed by audio.
(3) In the above embodiment, the control device 34 switched to the charging mode upon being switched to the operable state while the power supply connector 36 was connected to the charging connection portion 37, but instead of this configuration, the control device 34 may also switch to the charging mode in response to the control device 34 being switched to the operable state in advance and the power supply connector 36 being connected to the charging connection portion 37 thereafter.

### Third Embodiment

Hereinafter, an embodiment (third embodiment) that is an example of the present invention will be described with reference to the drawings. Note that the overall configuration of the tractor, the configuration relating to motor control, and the configuration relating to charging are the same as in the first embodiment. Hereinafter, only points that are different from the first embodiment will be described, and description of the same configurations will be omitted.

### Control for Charging in Third Embodiment

The control device 34 switches to the charging mode upon being switched to the operable state while the power supply connector 36 is connected to the charging connection portion 37. Then, in the charging mode, the travel battery 4 is charged by the power supply device KD.

The control device 34 prohibits movement travel of the body during a charging operation in the period from when charging of the travel battery 4 with the power supply device KD is started while the power supply connector 36 is connected to the charging connection portion 37, until when the charging of the travel battery 4 is completed. Specifically, the control device 34 does not drive the electric motor M during the charging operation.

The control device 34 continues charging by the power supply device KD even if the operation key 45 is removed from the insertion portion 46 after starting charging by the power supply device KD. Also, if the control device 34 continues performing charging by the power supply device KD after the operation key 45 is removed from the insertion portion 46, the control device 34 automatically switches to the non-operating state in response to charging being completed.

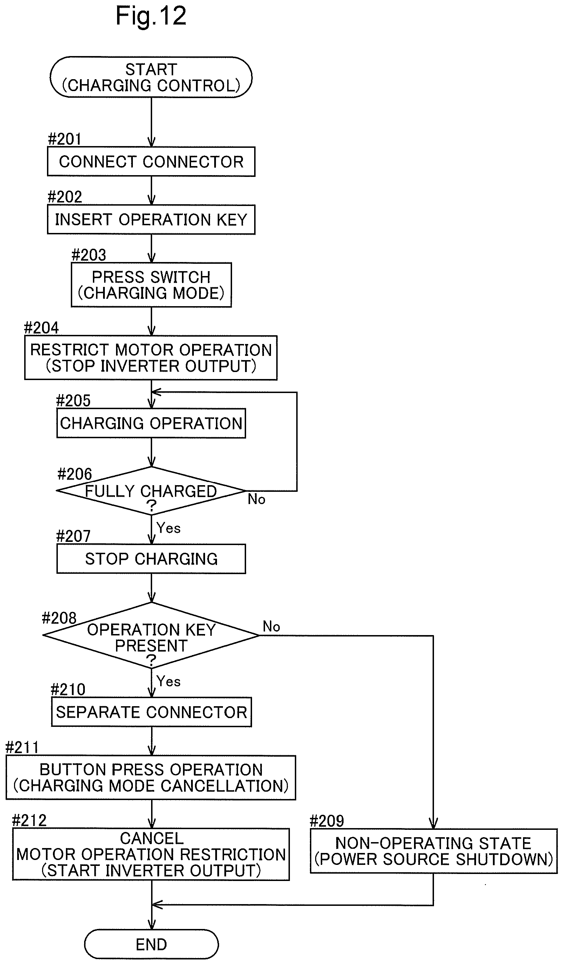

Hereinafter, specific charging control performed by the control device 34 will be described with reference to the flowchart in FIG. 12.

In response to charging the travel battery 4, the operator connects the power supply connector 36 of the power supply device KD to the charging connection portion 37. Next, in the switching operation portion 44 provided on the operation panel 43 of the driving section 3, the operation key 45 is inserted into and attached to the insertion portion 46, and the switch 47 is pressed. Upon recognizing this, the control device 34 switches to the charging mode (steps #201, #202, #203).

Upon being switched to the charging mode, the operation of the electric motor M is restrained by stopping the output of the inverter 14 (step #204). Next, necessary information is transmitted via the charging communication harness 49 so as to supply power to the power supply device KD, and the power supply device KD starts charging the travel battery 4 (step #205).

The travel battery 4 is charged to a preset charging state, and in response to reaching a fully-charged state, charging is stopped (steps #206, #207).

In response to charging ending, it is determined whether or not the operation key 45 has been inserted into the insertion portion 46 (step #208). At that time, if it is determined that the operation key 45 has been removed and is not attached, it is assumed that the operation key 45 was removed and taken by the driver while charging was being performed, and therefore the control device 34 is switched to the non-operating state and the power supply is mandatorily cut off (step #209).

Accordingly, if the power supply device KD continues performing charging after the operation key 45 is removed from the insertion portion 46, the control device 34 will automatically switch to the non-operating state in response to charging being completed.

In response to charging ending, if the operation key 45 has been inserted, the operator disconnects the power supply connector 36 of the power supply device KD to disconnect from the charging connection portion 37, and thereafter presses the switch 47, whereupon the charging mode is canceled (steps #208, #210, #211). At this time, the output of the inverter 14 is restarted to enable the electric motor M to operate, thereby canceling the operation restrained state of the electric motor M (step #212). Accordingly, while the travel battery 4 is being charged, the electric motor M is not activated even if an operation for causing the vehicle to travel is performed, and the vehicle is prohibited from performing movement travel.

### Alternative Embodiments of Third Embodiment

(1) In the above embodiment, the control device 34 did not drive the electric motor M during the charging operation, but instead of this configuration, the following configuration may also be used.

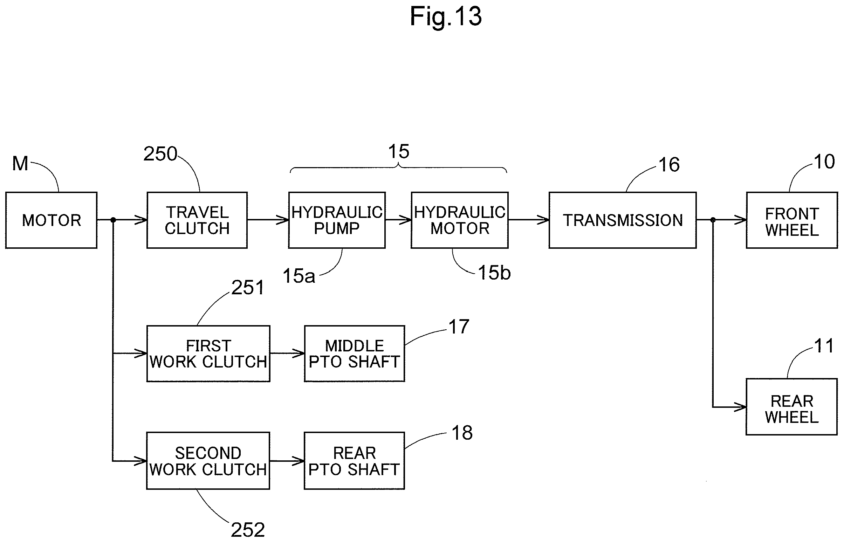

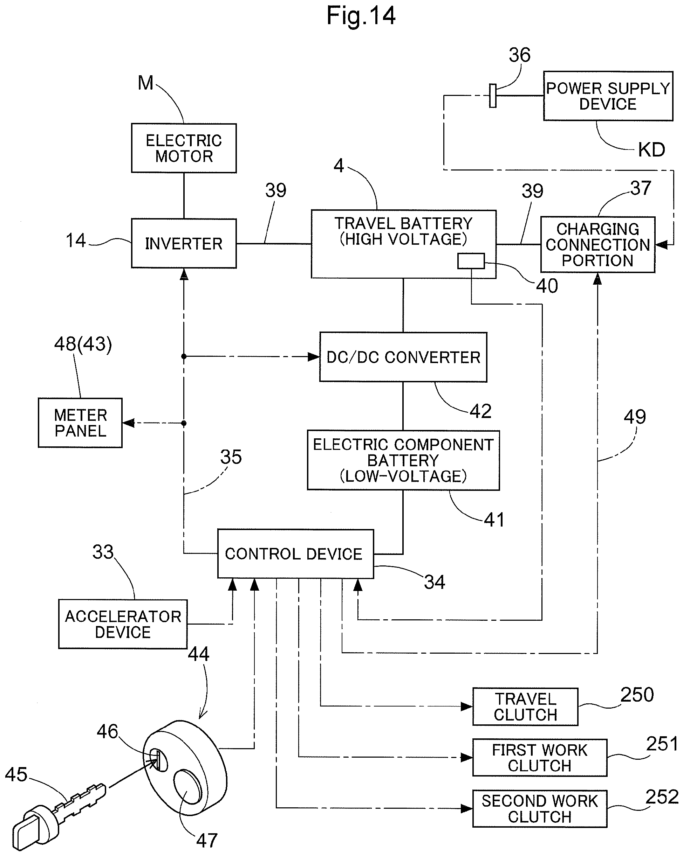

As shown in FIG. 13, a travel clutch 250 capable of interrupting the motive power is provided in the transmission path for transmitting the motive power of the electric motor M to the hydraulic continuously variable transmission 15, a first work clutch 251 capable of interrupting the motive power is provided in the transmission path for transmitting the motive power of the electric motor M to the middle PTO shaft 17, and a second work clutch 252 capable of interrupting the motive power is provided in the transmission path for transmitting the motive power of the electric motor M to the rear PTO shaft 18. As shown in FIG. 14, the control device 34 controls the operation of each of the travel clutch 250, the first work clutch 251, and the second work clutch 252.

In the case of using the hydraulic continuously variable transmission 15, a clutch is generally not provided since the travel stop state can be realized by the neutral position, but in this embodiment, the above-mentioned travel clutch 250 is provided and the control device 34 normally sets the travel clutch 250 to the engaged state, and even if a command to engage the travel clutch 250 is issued during a charging operation, the control device 34 maintains the travel clutch 250 in the disengaged state and prohibits movement of the body by not switching to the clutch-engaged state.

At this time, if either the first work clutch 251 or the second work clutch 252 is maintained in the engaged state, the work device can be driven while the body is stopped. Also, during the charging work, each of the first work clutch 251 and the second work clutch 252 may be maintained in a clutch-disengaged state.

Note that instead of such a configuration, a configuration may be used in which only one of the first work clutch 251 and the second work clutch 252 is provided, or a configuration may be used in which neither of the work clutches is provided.

(2) In the above embodiment, it was indicated that the operation key 45 can be inserted into the insertion portion 46, but instead of this configuration, the operation key 45 can be connected wirelessly to a reception unit in the body, and the control device 34 may switch to the operable state in response to the switch 47 being operated while the operation key 45 is close to the body.

(3) In the above embodiment, the control device 34 switched to the charging mode upon being switched to the operable state while the power supply connector 36 was connected to the charging connection portion 37, but instead of this configuration, the control device 34 may be switched to the operable state in advance, and thereafter the control device 34 may switch to the charging mode in response to the power supply connector 36 being connected to the charging connection portion 37.

### Industrial Applicability

The present invention is applicable not only to tractors but also to various electric work vehicles such as rice transplanters, combines, and construction machinery.

### Description of Reference Signs

### First Embodiment

4: Travel battery
34: Control device
40: Temperature sensor (temperature detection means)
50: Work device
51: Work device control unit
52: Communication line (communication means)

### Second Embodiment

34: Control device
36: Power supply connector
37: Connection portion
44: Start command means
45: Operation key
46: Insertion portion (attachment portion)
KD: Power supply device
M: Electric motor

### Third Embodiment

4: Battery
36: Power supply connector
37: Connection portion
250: Travel clutch
251: First work clutch
252: Second work clutch
KD: Power supply device
M: Electric motor

## Claims

1. An electric work vehicle comprising:
an electric motor configured to drive a body of the electric work vehicle to travel;
a battery configured to supply electric power for driving to the electric motor, the battery being chargeable by an external power supply device;
a temperature detection means for detecting a temperature of the battery; and
a control device configured to control operation of the electric motor and control a state of charging performed by the power supply device,
wherein in response to charging being performed by the power supply device, the control device sets a target charging current in such a manner as to enable work travel after charging, based on a detected value of the temperature detection means and a preset setting condition.

2. The electric work vehicle according to claim 1, wherein as the setting condition, the control device sets, in advance, a correlation between a temperature rise of the battery that is predicted to occur accompanying work travel after charging and a target charging current corresponding to an allowable temperature rise of the battery due to charging.

3. The electric work vehicle according to claim 2, wherein in response to work travel being performed, the control device stops operation of the electric motor in response to the temperature of the battery detected by the temperature detection means exceeding an allowable upper limit temperature, or executes a used power suppression process for reducing drive output of the electric motor, and sets the correlation in a manner such that even if a temperature rise occurs accompanying work travel after charging, the temperature of the battery is suppressed to a temperature according to which the used power suppression process is not executed.

4. The electric work vehicle according to any one of claims 1 to 3,
wherein a work device is attachable to and detachable from the body of the electric work vehicle, and
the control device sets the target charging current to a different value depending on whether or not the work device is attached.

5. The electric work vehicle according to claim 4,
wherein the work device includes a work device control unit,
the work device control unit and the control device are capable of communicating information with each other via a communication means, and
the control device determines a type of the attached work device based on identification information transmitted from the work device control unit, and sets the target charging current depending on the type.

6. The electric work vehicle according to any one of claims 1 to 5, wherein the outside of the battery is covered in a hermetically-sealed state by a storage case.

7. An electric work vehicle comprising:
an electric motor configured to drive a body of the electric work vehicle to travel;
a battery configured to supply electric power for driving to the electric motor, the battery being chargeable by an external power supply device;
a connection portion to which a power supply connector of the power supply device is connectable;
a control device configured to control operation of the electric motor and control a state of charging performed by the power supply device; and
a start command means for switching the control device to an operable state by being operated manually while a portable operation key is near the body or while the operation key is attached to an attachment portion,
wherein the control device is switched to a charging mode in response to being in the operable state and in a connection state where the power supply connector is connected to the connection portion, and
in the charging mode, the power supply device performs charging, and after charging by the power supply device is started, the power supply device continues to perform charging even if the operation key is separated from the body or the operation key is removed from the attachment portion.

8. The electric work vehicle according to claim 7, wherein the control device switches to the charging mode upon being switched to the operable state while the power supply connector is connected to the connection portion.

9. The electric work vehicle according to claim 7 or 8, wherein in response to the power supply device continuing to perform charging after the operation key is separated from the body or after the operation key is removed from the attachment portion, the control device automatically switches to a non-operating state in response to charging being completed.

10. The electric work vehicle according to any one of claims 7 to 9, wherein the operation key is insertable into an insertion portion serving as the attachment portion.

11. An electric work vehicle comprising:
an electric motor configured to drive a body of the electric work vehicle to travel;
a battery configured to supply electric power for driving to the electric motor, the battery being chargeable by an external power supply device;
a connection portion to which a power supply connector of the power supply device is connectable; and
a control device configured to control operation of the electric motor and control a state of charging performed by the power supply device,
wherein the control device prohibits movement travel of the body during a charging operation in a period from when charging of the battery by the power supply device is started while the power supply connector is connected to the connection portion, until when charging of the battery is completed.

12. The electric work vehicle according to claim 11, wherein the control device does not drive the electric motor during the charging operation.

13. The electric work vehicle according to claim 12,
wherein electric power from the battery is supplied to the electric motor via an inverter, and
during the charging operation, the control device stops driving of the electric motor by stopping output to the inverter.

14. The electric work vehicle according to any one of claims 11 to 13,
wherein motive power of the electric motor is transmitted to a body travel device via a travel clutch, and
during the charging operation, the control device does not engage the travel clutch even if a command to engage the travel clutch is issued.

15. The electric work vehicle according to any one of claims 11 to 14,
wherein a work device is attachable to and detachable from the body,
motive power of the electric motor is transmitted to the work device via a work clutch, and
during the charging operation, the control device does not engage the work clutch even if a command to engage the work clutch is issued.
